# EUROPEAN PATENT APPLICATION

(11) **EP 2 199 432 A1**
(43) Date of publication of application: **23.06.2010**
(21) Application number: 09275117.1
(22) Date of filing: 01.12.2009
(51) Int. Cl.: C25B 15/00, C25B 1/04

(54) **A hydrogen-oxygen generating system**

(30) Priority: 05.12.2008 KR 20080123053
(71) Applicant: Hwang, Boo-Sung, Kyung-ki do (KR)
(72) Inventor: Hwang, Boo-Sung, Kyung-ki do (KR)
(74) Representative: Hocking, Adrian Niall

(57) **Abstract**

This invention is about a hydrogen-oxygen generating system which contains a water capture-storage (10), where water is stored and hydrogen-oxygen mixed gas is captured, electrolyte unit (20) where inflowing pipe (25) to inhale water, and out-flowing pipe (26) to exhale the hydrogen-oxygen mixed gas, are formed, the 1^{st} heat radiant pipe (30) radiating the heat and supplying water to the electrolyte unit (20) at the same time from water capture-storage (10) with many electrodes (21)(22) to electrolyze water and connected to the lower part of the water capture-storage (10) and out-flowing pipe (26), and the 2^{nd} heat radiant pipe (40) connected to the upper part of the water capture-storage(10) radiating heat as it provides hydrogen-oxygen mixed gas to the water capture-storage (10).

## Description

### Technical Field

This invention is about hydrogen-oxygen mixed gas generating system which produces hydrogen-oxygen mixed gas.

### Background

Hydrogen-oxygen mixed-gas generating system is made to produce hydrogen and oxygen from electrolyzed water and gain pollution-free energy source, hydrogen-oxygen mixed gas. Water containing small amount of electrolytes is provided to the storage with positive (+) and negative (-) electrodes and electrolyzed by direct current to produce hydrogen and oxygen gases. Hydrogen and oxygen are produced at the ratio of 2 : 1 and hydrogen is formed as bubbles on the surface of negative (-) electrode and oxygen in bubbles on the surface of positive (+) electrode. Hydrogen and oxygen produced can be mixed and combusted and the mixture does not produce any pollutants when ignited, making it an important eco-friendly energy source.

However, during the process of electrolyzing water, a great amount of heat is produced. To cool the heat, a heat-protective system should be implicated. It would enlarge and complicate the machine for it will need to include various electric systems such as cooling pan or pump.

Also, hydrogen-oxygen mixed gas includes oxygen itself so it can be burned without outside oxygen. This suggests that the fire produced at the combustion always have possibility to backfire.

### Problem to be Solved

The invention is created to solve above mentioned problems; by implicating the endothermic radiation system, heat can be radiated without using any electric systems such as cooling pans or pumps, simplifying the structure and providing a compact mixed gas generating system.

The invention's other goal is to provide a safe hydrogen-oxygen generating system without any possibility of backfiring in combustion.

### Brief Description of the Drawings

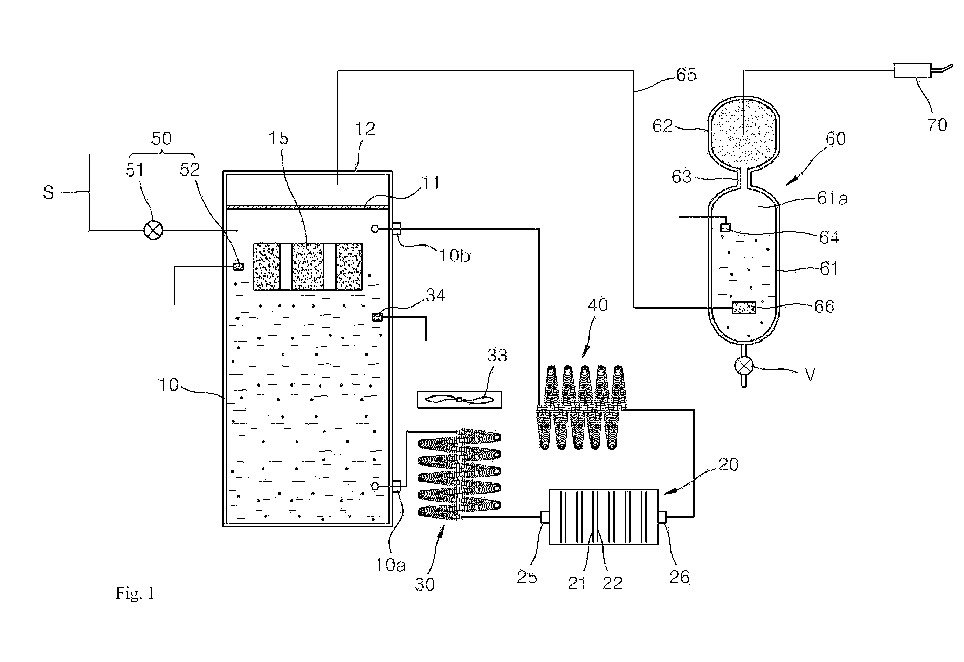

Diagram 1 is a sketch to explain the composition of the hydrogen-oxygen mixed gas generating system based on the invention;

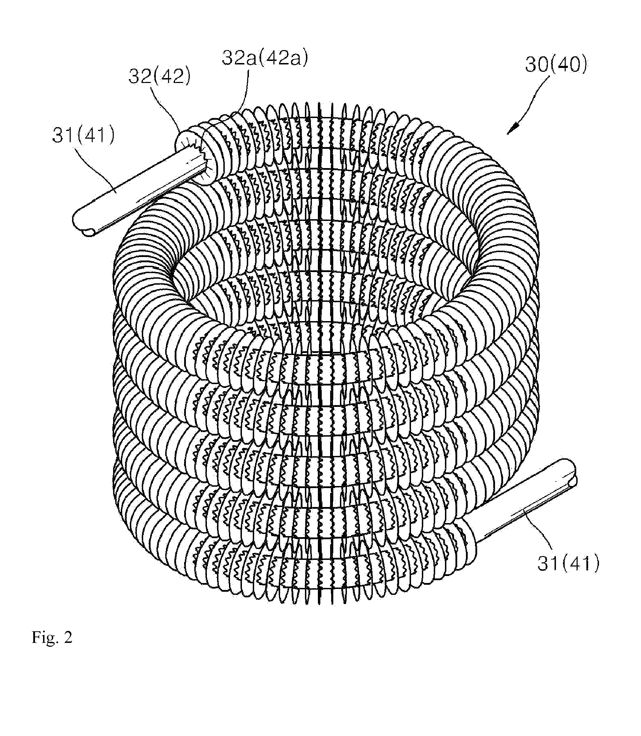

Diagram 2 is a sketch to describe the 1^{st} and 2^{nd} heat radiant pipes of diagram 1.

### The Method of Solution

To reach the goals, a hydrogen-oxygen mixed gas generating system based on the invention includes water capture-storage (10), where water is stored and hydrogen-oxygen mixed gas is captured, electrolyte unit (20) where inflowing pipe (25) to inhale water, and out-flowing pipe (26) to exhale the hydrogen-oxygen mixed gas, are formed, the 1^{st} heat radiant pipe (30) radiating the heat and supplying water to the electrolyte unit (20) at the same time from water capture-storage (10) with many electrodes (21)(22) to electrolyze water and connected to the lower part of the water capture-storage (10) and out-flowing pipe (26), and the 2^{nd} heat radiant pipe (40) connected to the upper part of the water capture-storage(10) radiating heat as it provides hydrogen-oxygen mixed gas to the water capture-storage(10). The 1^{st} heat radiant pipe (30) includes a heat radiant plate (31) rolled like a coil and a number of heat radiant pin formation centers (32) on the heat radiant plate (31) to increase the contact area with air. The 2^{nd} heat radiant pipe (40) includes a heat radiant plate (41) rolled like a coil and a number of heat radiant pin formation centers (42) on the heat radiant plate (41) to increase the contact area with air. Thermal conduction plates are formed on the surfaces of the 1^{st} heat radiant pipe (30) and the 2^{nd} heat radiant pipe (40) and the thermal conduction plate is formed when carbon nano-tube in nanometer size and tourmaline catalysts are applied alone or together.

The invention further includes the heat radiating pan (33) toward the 1^{st} and the 2^{nd} heat radiant pipes (30)(40) and the temperature sensor (34) which sends a signal to heat radiating pan (33) to activate when the temperature of the water capture-storage (10) goes beyond the certain point.

The water level preservation section (50) connected to the main water supplier (S) working to maintain a constant water level, reflux prevention filter unit (60) to prevent hydrogen-oxygen mixed gas flowing back to the water capture-storage (10), and the nozzle (70) connected with the reflux prevention filter unit (60) to spray hydrogen-oxygen mixed gas are also included.

In the invention, mixed gas centrifuge (11) in the water capture-storage (10) to separate hydrogen-oxygen mixed gas from water and the capturing device (12) which captures hydrogen-oxygen mixed gas separated from water by the mixed gas centrifuge (11) are also part of it.

### The Effect

The hydrogen-oxygen generating system according to the invention can radiate heat without using any electric machines by having a water capture-storage where water is stored and hydrogen-oxygen mixed gas is captured, an electrolyte unit producing hydrogen-oxygen mixed gas through electrolysis, and the 1^{st} and the 2^{nd} heat radiant pipes connecting the water capture-storage and the electrolyte unit, forming a hydrogen-oxygen generating system more simple and compact.

Further more, by using reflux preventing filter unit, highly pure mixed gas is produced and backfire is prevented, creating a safer hydrogen-oxygen generating system.

### Specific explanation for the practice of the invention

The following explanations are based on the sketches of the hydrogen-oxygen mixed gas generating system based on the invention.

As drawn, the hydrogen-oxygen mixed gas generating system based on the invention contains water capture-storage (10) where water is stored and hydrogen-oxygen mixed gas is captured, electrolyte unit (20) where inflowing pipe (25) to inhale water and out-flowing pipe (26) to exhale the hydrogen-oxygen mixed gas are formed and many electrodes (21)(22) are included inside to electrolyze water, connected to the lower part(10b) of the water capture-storage(10) and the out-flowing pipe (26), the 1^{st} heat radiant pipe (30) radiating the heat at the same time as it supplying water to the electrolyte unit (20) from water capture-storage (10), the 2^{nd} heat radiant pipe (40) connected to the upper part of the water capture-storage(10) radiating heat as it provide hydrogen-oxygen mixed gas to the water capture-storage(10), the water level preservation section (50) connected to the main water supplier (S) working to maintain a constant water level, reflux prevention filter unit (60) to prevent hydrogen-oxygen mixed gas flowing back to the water capture-storage (10), and the nozzle (70) connected with the reflux prevention filter unit (60) to spray hydrogen-oxygen mixed gas are included.

Water capture-storage (10) provides water to the electrode plate (20) and capture the hydrogen-oxygen mixed gas produced from the electrode unit (20) at the same time. Water capture-storage (10) is shaped as a cylinder and is made from a metal with high durability to stand the internal pressure.

Inside the water capture-storage (10), a mixed gas centrifuge (11) is installed to separate the hydrogen-oxygen mixed gas produced from the electrode unit (20) from water, and the capturing device (12) to capture the hydrogen-oxygen mixed gas can be formed at the upper part of the mixed gas centrifuge (11).

In this case, catalyst, preferably tourmaline catalyst is applied on the mesh net of the mixed gas centrifuge (11). Tourmaline catalyst is coated on the mesh net or contained during the manufacturing process of the net. The mixed gas centrifuge (11) makes it possible to capture the pure hydrogen-oxygen mixed gas by filtering any debris contained in the elevating hydrogen-oxygen mixed gas produced from -, + electrodes in electrolysis or debris that came in with the water. These rubbles are more effectively eliminated by the catalysis.

A buoy (15) is set up inside the water capture-storage (10). The buoy (15) increases the inflowing pressure to help the hydrogen-oxygen mixed gas to out flow to the 1^{st} heat radiant pipe (30) when hydrogen-oxygen mixed gas produced from the electrolyte unit (20) is provided to the upper part (10b) of the water capture-storage (10) through the 2^{nd} heat radiant pipe (40). The hydrogen-oxygen mixed gas flowing into the upper part of the water capture-storage is force pressure on the whole surface of the buoy (15) and the buoy forces stored water, pushing water to flow out of the water capture-storage with strong pressure.

The electrode unit (20)'s goal is to produce hydrogen and oxygen by electrolyzing water, thereby includes multiple negative (-) and positive (+) electrodes (21) (22) placed certain distance from away each other in a sealed pipe or box with a inflowing pipe (25) on one end and the out-flowing pipe on the other end to supply water from the water capture-storage (10) and exhale hydrogen-oxygen mixed gas. These electrodes are polished by nano-technology to electrolyze water effectively and help formed hydrogen-oxygen bubbles to separate easily.

Nano-technology mean polishing -, + electrodes' (21) (22) surface by nano-units. Polishing by nano technology would minimize the electrodes' surface friction, making hydrogen or oxygen gas bubbles to separate easily. The technical, thermal, electrical, magnetic, and optical properties change when the size of the matter decreases from bulk to nano meter, making electrolysis on water effortless.

On the surfaces of -, + electrodes (21) (22), the carbon nano-tube or tourmaline catalyst can be attached. The tourmaline catalyst would be grinded into micro to nanometer powder, burned in 1300 °C and glued to the -, + electrodes(21) (22). Tourmaline is a mineral under the hexagonal system like crystal; it produced electricity by friction, massive amount of anion, and lots of hydrogen and oxygen by electrolysis. Tourmaline becomes a catalyst with tiny pores on; it can increase the contact area with electrolyte after being powdered and burned. The tourmaline catalyst can promote the electrolysis of electrolytes when attached on -, + electrodes (21) (22).

The -, + electrodes (21) (22) can be made of the tourmaline catalyst in a small book form.

The 1^{st} heat radiant pipe (30) includes a heat radiant plate (31) rolled like a coil and a number of heat radiant pin formations (32) on the heat radiant plate (31) to increase the contact area with air. It plays a role of supplying water from water capture-storage (10) to the electrolyte unit (20) and also absorbs heat from the water and radiates the heat.

The heat radiant pin formation is pierced in the heat radiant pipe (31) and increase the contact area with the air that goes through the heat radiant pipe (31). The radiant pin formation (32) can be made into various shapes but in the example, it is formed as a screw made of long and thin metal plate; the metal plate has multiple irregularities (32a) on the surface.

The 2^{nd} heat radiant pipe (40) includes a heat radiant plate (41) rolled like a coil and a number of heat radiant pin formation center (42) on the heat radiant plate (41) to increase the contact area with air. It plays a role of supplying water from water capture-storage (10) to the electrolyte unit (20) and also absorbs heat from the water and radiates the heat.

The heat radiant pin formation is pierced in the heat radiant pipe (41) and increase the contact area with the air that goes through the heat radiant pipe (41). The radiant pin formation center (42) can be made into various shapes but in the example, it is formed as a screw made of long and thin metal plate; the metal plate has multiple irregularities (42a) on the surface.

Thermal conduction plates are formed on the surfaces of the 1^{st} heat radiant pipe (30) and the 2^{nd} heat radiant pipe (40) and the thermal conduction plate is formed when carbon nano-tube in nanometer size and tourmaline catalysts are applied alone or together. In the example, the thermal conduction plate is formed by carbon nano-tube and tourmaline catalyst in nanometer size, preferably between 10-60 nanometer sizes.

The example can also include the heat radiating pan (33) toward the 1^{st}, and the 2^{nd} heat radiant pipes (30)(40) and the temperature sensor (34) which send a signal to heat radiating pan (33) to activate when the temperature of the water capture-storage (10) goes beyond the certain point. The heat radiating pan (33) exchanges the heat and air by ventilating the air to either the heat radiant pin formation (32) of the 1^{st} heat radiant pipe (30) or the 2^{nd} radiant pipe (40). On the sketch of the example, the heat radiating pan (33) is toward the 1^{st} heat radiant pipe (30) but keep in mind that this is only an example. The heat radiating pan (33) can face toward the 2^{nd} heat radiant pipe (40).

The temperature sensor (34) send a signal to the heat radiating pan (33) to activate if the temperature of the water capture-storage is too high or the temperature has elevated too much by an error.

The water level preservation section (50) connected to the main water supplier (S) working to maintain a constant water level can work in many ways. In the example, the water level preservation section (50) has a solenoid valve (51) connected to the main water supplier (S) and the water level sensor (52) which can signal the solenoid valve (51) to open if it senses that the water level is higher than it should be. The water level preservation section (50) can also be formed as a buoy as in the toilet.

Reflux prevention filter unit (60) exists to make hydrogen-oxygen mixed gas with high purity by eliminating any debris in the gas coming from the capturing device (12) through the gas line (65) and furthermore, to prevent any reflux of hydrogen-oxygen gas into the capturing device. Therefore, reflux prevention filter unit (60) contains the gas line (65) connected to the capturing device (12), water storage (61) where water is stored, catalyst storage (62) on the upper part of the water storage (61) storing catalysts, and the bentyulibu (63) connecting the water storage (61) and the catalyst storage (62). In the water storage (61), a sub-capturing device (61a) is installed at the upper part of the water to capture hydrogen-oxygen mixed gas traveling through water.

The catalyst storage (62) stores catalysts such as tourmaline and platinum catalysts. The catalyst storage eliminates any chemical rubbles using catalysis.

Bentyulibu's (63) goals are to mix the hydrogen gas and oxygen gas evenly and to prevent the mixed gas in the catalyst storage (62) to flow back into the sub-capturing device (61a). To do its work successfully, one to dozens of tiny water pipes are built inside the bentyulibu (63) and better, the water pipes in screw forms. The tiny water pipes in the bentyulibu (63) preferably have a diameter between 0.2mm to 10mm.

Actually, hydrogen gas and the oxygen gas in the water storage (61) are partially not mixed. However, as they travel through the tiny water pipes in the bentyulibu (63) they naturally are mixed together.

In the water storage (61), water level sensing section (64) is installed. The water level sensing section (64) measures the amount of the water used in the water storage (61) and provide water from the water tank. The water level sensing section (64) can be made into various shapes such as buoy or sensor. The water level sensing section (64) and the water tank is commonly used technique so further explanation is omitted.

Also, debris eliminating filter can be set up inside the gas line in the water storage (61). The debris eliminating filter removes all rubbles contained in the hydrogen-oxygen mixed gas coming through the gas line (65).

Due to the structure of the reflux prevention filter unit (60) any debris in the hydrogen-oxygen mixed gas provide through the gas line (65) is removed by the debris eliminating filter (66). The elevated pure mixed gas is gathered in the sub-capturing device (61a) so the gas does not reflux. The gas in the sub-capturing device is then more evenly mixed and it travels through the bentyulibu (63) and filtered as it goes through the catalyst storage (62) and become a mixed gas with high purity.

The following explains the process of the hydrogen-oxygen mixed gas generating system.

According to the structure described above, when direct current is provided to the electrolyte unit (20), hydrogen and oxygen bubbles are produced as electrolysis occur between the - and + electrodes (21)(22). The mixed gas then is supplied to the water at the top of the water capture-storage (10) through the 2^{nd} heat radiant pipe (40).

Then the internal pressure of the water capture-storage (10) increases and the increased pressure make water to go out through the 1^{st} heat radiant pipe (30). It means that even without implicating structures such as pump, water is naturally supplied to the electrolyte unit (20) through the 1^{st} heat radiant pipe (30) by the pressure of the hydrogen-oxygen mixed gas supplied to the water capture-storage (10). Hydrogen-oxygen mixed gas is then gather in the capturing device (12) through bypassing the mixed gas centrifuge (11) and is used as combustion gas going through the gas line (65) -> reflux prevention filter unit (60) -> nozzle (70).

Lots of heat is produced as electrolysis occurs in the electrolyte unit (20) and the heat is radiated as it contacts air by the 1^{st} and 2^{nd} heat radiant pipes (30) (40) and the elevation of the temperature in the water capture-storage is prevented.

Also, if the temperature of the water capture-storage (10) elevates beyond the certain point or increase too high by an error, the temperature sensor (34) sends a signal the heat radiating pan (33) to activate and rapid cooling becomes possible.

The invention is explained based on the example experimented but keep in mind that this is only one of the possibilities and anyone with sufficient knowledge in the field would understand that variations can be applied.

### Signs regarding important parts of the figures

- 10 -: water capture-storage
- 11 -: mixed gas centrifuge
- 12 -: capturing device
- 15 -: buoy
- 20 -: electrolyte unit
- 21,22 -: electrodes
- 25,26 -: inflowing and out-glowing pipes
- 30 -: the 1^{st} heat radiant pipe
- 31 -: heat radiant plate
- 32 -: heat radiant pin formation
- 32a -: irregularities
- 33 -: heat radiating pan
- 34 -: temperature sensor
- 40 -: the 2^{nd} heat radiant pipe
- 41 -: heat radiant plate
- 42 -: heat radiant pin formation center
- 42a -: irregularities
- 50 -: water level preservation section
- 51 -: solenoid valve
- 52 -: water level sensor
- 60 -: reflux prevention filter unit
- 61 -: water storage
- 61a -: sub-capturing device
- 62 -: catalyst storage
- 63 -: bentyulibu
- 64 -: water level sensing section
- 65 -: gas line
- 66 -: debris removing filter
- 70 -: nozzle

## Claims

1. A hydrogen-oxygen generating system comprising a water capture-storage (10), where water is stored and hydrogen-oxygen mixed gas is captured, an electrolyte unit (20) where inflowing pipe (25) to inhale water, and out-flowing pipe (26) to exhale the hydrogen-oxygen mixed gas, are formed, the 1^{st} heat radiant pipe (30) radiating the heat and supplying water to the electrolyte unit (20) at the same time from water capture-storage (10) with many electrodes (21)(22) to electrolyze water and connected to the lower part of the water capture-storage (10) and out-flowing pipe (26), and the 2^{nd} heat radiant pipe (40) connected to the upper part of the water capture-storage(10) radiating heat as it provides hydrogen-oxygen mixed gas to the water capture-storage(10);
the 1^{st} heat radiant pipe (30) includes a heat radiant plate (31) rolled like a coil and a number of heat radiant pin formation centers (32) on the heat radiant plate (31) to increase the contact area with air;
the 2^{nd} heat radiant pipe (40) includes a heat radiant plate (41) rolled like a coil and a number of heat radiant pin formation centers (42) on the heat radiant plate (41) to increase the contact area with air; and
thermal conduction plates are formed on the surfaces of the 1^{st} heat radiant pipe (30) and the 2^{nd} heat radiant pipe (40) and the thermal conduction plate is formed when carbon nano-tube in nanometer size and tourmaline catalysts are applied alone or together.

2. A hydrogen-oxygen generating system according to claim 1, wherein a hydrogen-oxygen generating system includes the heat radiating pan (33) toward the 1^{st} and the 2^{nd} heat radiant pipes (30)(40) and the temperature sensor (34) which sends a signal to heat radiating pan (33) to activate when the temperature of the water capture-storage (10) goes beyond the certain point.

3. A hydrogen-oxygen generating system according to claim 1, wherein a water level preservation section (50) connected to the main water supplier (S) working to maintain a constant water level, reflux prevention filter unit (60) to prevent hydrogen-oxygen mixed gas flowing back to the water capture-storage (10), and the nozzle (70) connected with the reflux prevention filter unit (60) to spray hydrogen-oxygen mixed gas are also included.

4. A hydrogen-oxygen generating system according to claim 1, wherein a hydrogen-oxygen generating system includes a mixed gas centrifuge (11) in the water capture-storage (10) to separate hydrogen-oxygen mixed gas from water and the capturing device (12) which captures hydrogen-oxygen mixed gas separated from water by the mixed gas centrifuge (11).
